# EUROPEAN PATENT SPECIFICATION

(11) **EP 4 346 097 B1**
(45) Date of publication and mention of the grant of the patent: **28.10.2026**
(21) Application number: 21947440.0
(22) Date of filing: 29.06.2021
(51) Int. Cl.: H02S 50/00

(54) **POWER STATION OPERATION AND MAINTENANCE SYSTEM, POWER STATION OPERATION AND MAINTENANCE METHOD, AND PHOTOVOLTAIC POWER STATION**
KRAFTWERKSBETRIEBS- UND WARTUNGSSYSTEM, KRAFTWERKSBETRIEBS- UND WARTUNGSVERFAHREN UND FOTOVOLTAISCHES KRAFTWERK
SYSTÈME D'EXPLOITATION ET DE MAINTENANCE DE CENTRALE, PROCÉDÉ D'EXPLOITATION ET DE MAINTENANCE DE CENTRALE, ET CENTRALE PHOTOVOLTAÏQUE

(43) Date of publication of application: 03.04.2024
(73) Proprietor: Huawei Digital Power Technologies Co., Ltd., Shenzhen, Guangdong 518043 (CN)
(72) Inventor: ZHANG, Yanzhong, Shenzhen, Guangdong 518129 (CN); SHU, Zhenhuan, Shenzhen, Guangdong 518129 (CN); WANG, Jianqiang, Shenzhen, Guangdong 518129 (CN)
(74) Representative: Isarpatent
(86) International application number: PCT/CN2021/103048
(87) International publication number: WO 2023/272479

(56) References cited:
- EP-A1- 3 506 448
- CN-A- 108 322 187
- CN-A- 108 599 724
- CN-A- 110 233 877
- KR-A- 20180 138 354
- US-A1- 2021 126 582

## Description

### TECHNICAL FIELD

This application relates to the field of power electronics technologies, and in particular, to a power station operation and maintenance system, a power station operation and maintenance method, and a photovoltaic power station.

### BACKGROUND

As time goes by, different types of faulty modules (for example, a faulty module that has a hidden crack, shading, degradation, and performance deterioration) may appear in a photovoltaic power station. An energy yield of the faulty module decreases, and this even affects an energy yield of a module connected in series/parallel to the faulty module. Therefore, how to find a faulty module and increase an energy yield of the faulty module is especially important.

In the conventional technology, an IV curve (which may be referred to as an IV curve) of a photovoltaic string may be scanned by using a photovoltaic controller, and a health diagnosis may be performed on the IV curve of the photovoltaic string to detect a faulty photovoltaic string. However, positioning and detection of a faulty module in the faulty photovoltaic string and replacement of the faulty module need to be performed manually. Costs of manually performing positioning and detection and module replacement are excessively high. In another conventional technology, an image of a photovoltaic module may be collected by using a thermal infrared camera, fault identification is performed on the image of the photovoltaic module based on an image fault identification algorithm, to obtain a faulty module, and whether the faulty module needs to be replaced is manually determined. However, quantitative evaluation cannot be performed on impact of an energy yield loss of the faulty module, manners for processing the faulty module are limited, and costs are excessively high.

US 2021/126582 A1 discloses a method for detecting a fault in a solar panel in a solar farm.

### SUMMARY

This application provides a power station operation and maintenance system, a power station operation and maintenance method, and a photovoltaic power station, so that a quantitative analysis can be performed on an energy yield loss of a faulty module to select a target operation and maintenance measure from a plurality of operation and maintenance measures, and diversity of operation and maintenance measures and an energy yield of the module are increased. There are low costs, and this is more applicable.

The invention is about a system and method as recited in independent claims 1 and 10. Further advantageous embodiments are recited in the dependent claims.

### BRIEF DESCRIPTION OF DRAWINGS

FIG. 1 is a schematic diagram of an application scenario of a power station operation and maintenance system according to this application;
FIG. 2 is a schematic diagram of a structure of a power station operation and maintenance system according to this application;
FIG. 3 is a schematic diagram of another structure of a power station operation and maintenance system according to this application;
FIG. 4 is a schematic diagram of still another structure of a power station operation and maintenance system according to this application;
FIG. 5 is a schematic diagram of yet another structure of a power station operation and maintenance system according to this application; and
FIG. 6 is a schematic flowchart of a power station operation and maintenance method according to this application.

### DESCRIPTION OF EMBODIMENTS

A power station operation and maintenance system provided in this application may be applied to a plurality of application fields such as a power inspection field (for example, inspection and operation and maintenance are performed on a power station with weak communication or an insufficient bandwidth), a monitoring field (for example, intelligent security protection), an environmental protection field (for example, environment monitoring, environmental law enforcement, and environment governance), or a reconnaissance field. This may be specifically determined based on an actual application scenario, and is not limited herein.

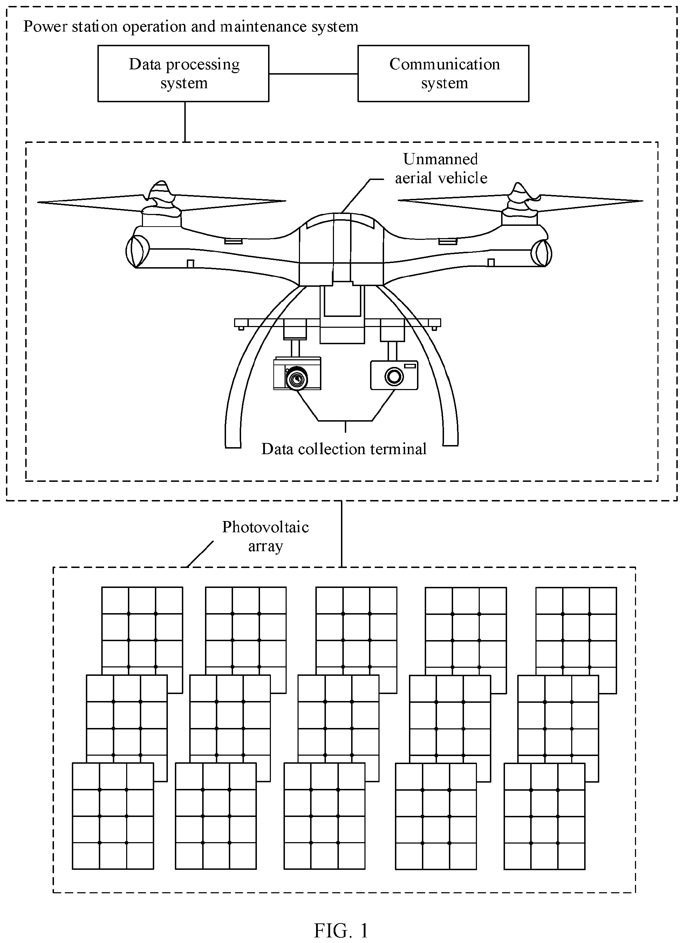

FIG. 1 is a schematic diagram of an application scenario of a power station operation and maintenance system according to this application. The power station operation and maintenance system provided in this application may be applied to a photovoltaic power station. The photovoltaic power station further includes a plurality of photovoltaic strings, and the plurality of photovoltaic strings herein may form a photovoltaic array. As shown in FIG. 1, the power station operation and maintenance system may include a data processing system, a communication system, an unmanned aerial vehicle, and a data collection terminal disposed on the unmanned aerial vehicle. In a process in which the power station operation and maintenance system performs operation and maintenance on a faulty module in the photovoltaic array, the data collection terminal may collect module image data (for example, a picture or a video) of each photovoltaic module in the photovoltaic array in real time in a process in which the unmanned aerial vehicle flies. In this case, the data processing system may determine the faulty module (for example, a photovoltaic module with an abnormal energy yield) and a normal module from the photovoltaic array based on the module image data of each photovoltaic module, and obtain first power generation data of the faulty module and second power generation data of the normal module. Further, the data processing system may determine an annual lost energy yield of the faulty module based on the first power generation data, the second power generation data, and a preset energy yield of the photovoltaic power station, and obtain a target operation and maintenance measure from a plurality of operation and maintenance measures based on the annual lost energy yield. After the target operation and maintenance measure is determined, the communication system may notify, based on the target operation and maintenance measure, an operation and maintenance person of the power station to perform operation and maintenance on the faulty module to increase an energy yield, so that an energy yield of a module can be increased optimally at lowest costs. There are low costs and a convenient operation, and health and an energy yield of the photovoltaic power station are further improved. This is more applicable.

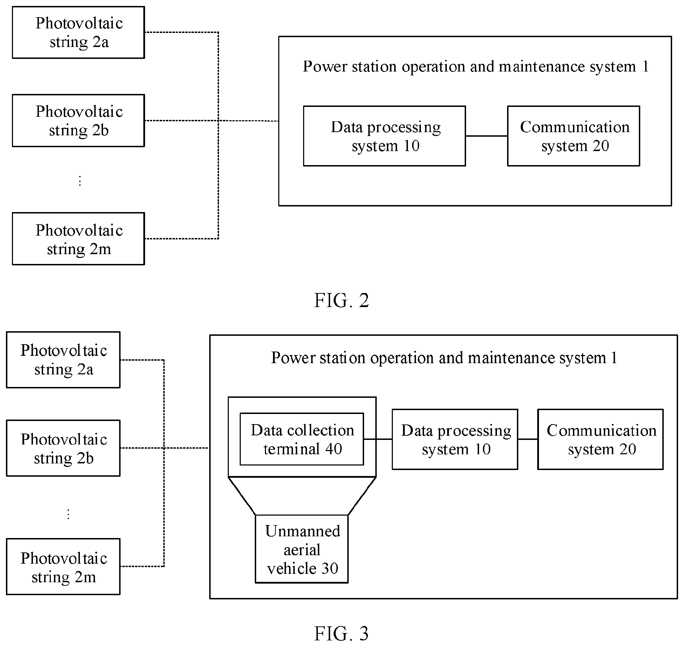

The following provides example descriptions of the power station operation and maintenance system provided in this application and a working principle of the power station operation and maintenance system with reference to FIG. 2 to FIG. 5.

FIG. 2 is a schematic diagram of a structure of a power station operation and maintenance system according to this application. As shown in FIG. 2, a power station operation and maintenance system 1 includes a data processing system 10 and a communication system 20. The power station operation and maintenance system 1 may be applied to a photovoltaic power station, and the photovoltaic power station further includes a plurality of photovoltaic strings (for example, a photovoltaic string 2a to a photovoltaic string 2m). One photovoltaic string may be formed by connecting at least one photovoltaic module (that is, one or more photovoltaic modules) in series/parallel, and the photovoltaic module may also be referred to as a solar panel or a photovoltaic panel. In this application, third-party software and/or hardware that have/has a data processing function in the power station operation and maintenance system may be collectively referred to as a data processing system. In this application, one or more modules in the power station operation and maintenance system that have a function of communicating with an operation and maintenance person of the power station may be further collectively referred to as a communication system. For example, the communication system may be configured to notify an operation and maintenance user of the photovoltaic power station to perform operation and maintenance on a faulty module, to increase an energy yield of the module.

In some feasible implementations, for ease of description, the photovoltaic string 2a is used as an example for description. The data processing system 10 may determine a faulty module and a normal module based on module data of each photovoltaic module in the photovoltaic string 2a, and obtain first power generation data of the faulty module and second power generation data of the normal module. The module data herein may include module image data, an IV curve (which may also be referred to as a volt-ampere characteristic curve), and/or other data of the photovoltaic module. The IV curve is a characteristic curve that describes a corresponding change of an output current when an output voltage of the photovoltaic module changes from a short-circuit voltage to an open-circuit voltage. The faulty module can be understood as a photovoltaic module with an abnormal energy yield, for example, a photovoltaic module whose diode fails or is faulty, a photovoltaic module that has power degradation, a hidden crack, shading, and different electrical performance, or a completely damaged photovoltaic module. The power degradation herein may include light induced degradation (LID), aging degradation, and potential induced degradation (PID). Light induced degradation is that an output power decreases because a composite center is generated inside a material after the photovoltaic module is exposed to light. Aging degradation is that the photovoltaic module is slowly degraded in a long-term application. Potential induced degradation is that a module power is degraded due to a high voltage between a circuit inside the photovoltaic module and a ground metal frame of the photovoltaic module. Further, the data processing system 10 may determine an annual lost energy yield of the faulty module based on the first power generation data, the second power generation data, and a preset energy yield (which may also be referred to as a theoretical energy yield or a quantity of use hours per year) of the photovoltaic power station, and obtain a target operation and maintenance measure from a plurality of operation and maintenance measures based on the annual lost energy yield. The preset energy yield may be a default configuration parameter of the photovoltaic power station, or an energy yield that is set by a user for the photovoltaic power station. This may be specifically determined based on an actual application scenario, and is not limited herein. In this case, the communication system 20 may notify, based on the target operation and maintenance measure, the operation and maintenance user of the photovoltaic power station to perform operation and maintenance on the faulty module in the photovoltaic string 2a, to increase an energy yield of the module after operation and maintenance, so that the energy yield of the module is increased optimally at lowest costs. There are low costs and a convenient operation.

In some feasible implementations, FIG. 3 is a schematic diagram of another structure of a power station operation and maintenance system according to this application. As shown in FIG. 3, when the module data of the photovoltaic module includes the module image data, the power station operation and maintenance system 1 shown in FIG. 2 further includes an unmanned aerial vehicle 30 and a data collection terminal 40 disposed on the unmanned aerial vehicle 30. In this application, one or more terminal devices that have a data collection function in the power station operation and maintenance system may be collectively referred to as a data collection terminal. For example, the data collection terminal may be a camera device, a sensor, or another terminal device. The camera device herein may be a visible-light camera, a thermal infrared dual-light camera, an electroluminescent (EL) camera, or another camera device. The EL camera may also be referred to as a short-wave infrared camera. The thermal infrared dual-light camera may be a camera that detects an infrared specific band signal of thermal radiation of an object by using a photoelectric technology and converts the signal into an image and a graph that may be visually distinguished by a human. The short-wave infrared camera may be a camera that detects a short-wave infrared specific band signal (usually within a range of 0.9 µm to 1.7 µm) by using the photoelectric technology and converts the band signal into an image and a graph that may be visually distinguished by the human. The data collection terminal 40 may collect (for example, photograph) module image data of each photovoltaic module in the photovoltaic string 2a in real time in a process in which the unmanned aerial vehicle 30 flies. The module image data may carry a photographing height, a photographing tilt angle, and longitude and latitude information of the unmanned aerial vehicle 30 that exist when the data collection terminal 40 photographs the photovoltaic module. Communication may be established between the data collection terminal 40 and the data processing system 10. In this case, the data processing system 10 may obtain the module image data of each photovoltaic module in the photovoltaic string 2a from the data collection terminal 40, and determine the faulty module based on the module image data of each photovoltaic module.

In some feasible implementations, the module image data of the photovoltaic module includes visible-light image data, thermal infrared image data, short-wave infrared image data, and/or other image data. It can be understood that the visible-light image data herein may directly display some surface faults of the photovoltaic module, to quickly and subsequently determine whether the photovoltaic module is a faulty module. The thermal infrared image data may display temperatures of parts of the photovoltaic module and a distribution of the temperatures. Different temperatures or thermal infrared areas (for example, regional areas) of the parts of the photovoltaic module may be determined based on regions of different colors in the thermal infrared image data, to subsequently and directly determine a test temperature of the photovoltaic module or a thermal infrared area of the module, and further determine, based on the test temperature or the thermal infrared area of the module, whether the photovoltaic module has a thermal infrared fault. When the module image data includes the visible-light image data, the data processing system 10 may determine, based on the visible-light image data, whether the photovoltaic module has a surface fault, and when the photovoltaic module has a surface fault, determine that the photovoltaic module is a faulty module. When the module image data includes the thermal infrared image data, the data processing system 10 may perform thermal infrared fault detection on the thermal infrared image data to determine a faulty module. Specifically, the data processing system 10 may determine the test temperature or the thermal infrared area of the photovoltaic module based on the thermal infrared image data; and if the test temperature is greater than a preset temperature threshold or the thermal infrared area is greater than a threshold area threshold, determine that the photovoltaic module is a faulty module with a thermal infrared fault (for example, a hot spot). The preset temperature threshold or the threshold area threshold herein may be a default value (that is, a default value specified when the photovoltaic module is delivered from a factory). The preset temperature threshold is used as an example for description. For example, the preset temperature threshold may be 30 degrees Celsius or another temperature value. Usually, a test temperature of the faulty module is approximately 10 degrees Celsius higher than the preset temperature threshold or another temperature value.

In some feasible implementations, the short-wave infrared image data may display a defect form of the photovoltaic module, to subsequently determine that the photovoltaic module has a target defect. When the module image data includes the short-wave infrared image data, the data processing system 10 may perform short-wave infrared fault detection on the short-wave infrared image data to determine a faulty module. Specifically, the data processing system 10 may determine a form of the photovoltaic module based on the short-wave infrared image data, and if the form of the photovoltaic module is included in a defect form sample database, determine that the photovoltaic module is a faulty module with a target defect. The defect sample database herein may be a sample database that is pre-stored in the data processing system 10 and that includes a defect form of a photovoltaic module, or the data processing system 10 may directly invoke a defect form sample database of a photovoltaic module in third-party software. The defect sample database may include sample data of a plurality of defect forms of the photovoltaic module. The plurality of defect forms may include a hidden crack defect form, a fragment defect form, a poor soldering defect form, a broken gate defect form, a bypass diode defect form (a defect form formed because a bypass diode in the photovoltaic module is faulty), a hotspot defect form (that is, a physical damage exists inside the photovoltaic module), another defect form, or the like. Specifically, the data processing system 10 may determine a form of the photovoltaic module (the form herein may be a defect form or a normal module form) based on the short-wave infrared image data, match the form of the photovoltaic module with a plurality of defect forms in the defect form sample database, and if a target defect form matching the form of the photovoltaic module is found from the plurality of defect forms, determine that the form of the photovoltaic module is included in the defect form sample database, and determine that the photovoltaic module has a target defect corresponding to the target defect form, that is, the photovoltaic module is a faulty module having the target defect. It can be understood that, when a matching degree (that is, a similarity, for example, 80% or another value) between the form of the photovoltaic module and a defect form is greater than a matching degree threshold, the data processing system 10 may determine that the defect form is the target defect form that matches the form of the photovoltaic module. The matching degree threshold herein may be a value specified by the user or a default value.

In some feasible implementations, after determining the faulty module in the photovoltaic string 2a, the data processing system 10 may determine longitude and latitude location information of the faulty module based on the photographing height, the photographing tilt angle, and the longitude and latitude information of the unmanned aerial vehicle 30 that are in the module image data of the faulty module. The longitude and latitude location information herein may be physical location information, and the physical location information may be understood as location information calibrated based on geographic information. Further, the data processing system 10 may obtain the longitude and latitude location information of the faulty module, and determine a target location of the faulty module based on the longitude and latitude location information of the faulty module and a module layout map of the photovoltaic power station. The module layout map includes plane location information of all photovoltaic modules in the photovoltaic power station, and may be used to quickly position the target location of the faulty module. The target location herein may be logical location information, and the logical location information may be understood as logical location information calibrated by using a sequence number, for example, a power station arrangement sequence number (for example, a module F in a string D of an inverter C in a sub-array B of a station A). After positioning the target location of the faulty module, the data processing system 10 may further obtain the first power generation data of the faulty module based on the target location, and obtain the second power generation data of the normal module based on an adjacent location of the target location in the module layout map.

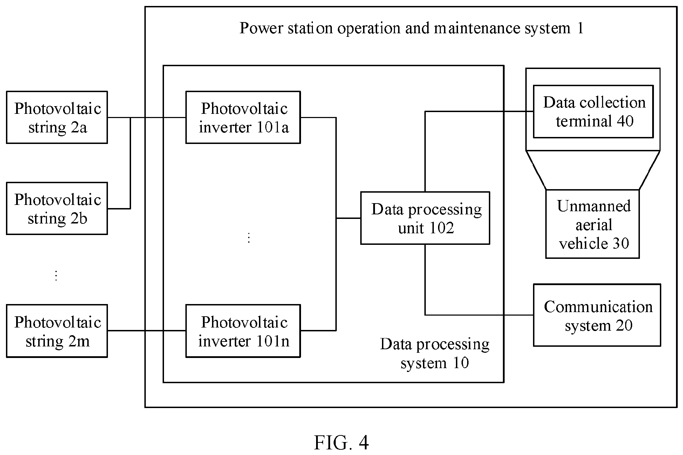

Optionally, in some feasible implementations, when the module data of the photovoltaic module further includes the IV curve, refer to FIG. 4. FIG. 4 is a schematic diagram of still another structure of a power station operation and maintenance system according to this application. As shown in FIG. 4, the data processing system 10 shown in FIG. 3 includes a data processing unit 102 and at least one photovoltaic inverter (for example, a photovoltaic inverter 101a to a photovoltaic inverter 101n) that is connected to a photovoltaic string 2a to a photovoltaic string 2m. One photovoltaic inverter may be connected to at least one photovoltaic string (that is, one or more photovoltaic strings). For example, the photovoltaic inverter 101a is connected to the photovoltaic string 2a and the photovoltaic string 2b, ..., and the photovoltaic inverter 101n is connected to the photovoltaic string 2m. Each of the photovoltaic inverter 101a to the photovoltaic inverter 101n may collect an IV curve of each of the photovoltaic string 2a to the photovoltaic string 2m, and output the IV curve of each photovoltaic string to the data processing unit 102. In this case, the data processing unit 102 may determine a faulty photovoltaic string (for example, the photovoltaic string 2a) based on the IV curve of each photovoltaic string. After determining the faulty photovoltaic string, the data collection terminal 40 may collect the module image data of each photovoltaic module in the photovoltaic string 2a in real time in the process in which the unmanned aerial vehicle 30 flies. Because communication is established between the data collection terminal 40 and the data processing unit 102, the data processing unit 102 may obtain the module image data of each photovoltaic module in the photovoltaic string 2a from the data collection terminal 40, and determine the faulty module based on the module image data of each photovoltaic module, so that the faulty module can be quickly positioned. There is a more convenient operation. After determining the faulty module in the photovoltaic string 2a, the data processing unit 102 may determine the longitude and latitude location information of the faulty module based on the photographing height, the photographing tilt angle, and the longitude and latitude information of the unmanned aerial vehicle 30 that are in the module image data of the faulty module. Further, the data processing unit 102 may obtain the longitude and latitude location information of the faulty module, and determine the target location of the faulty module based on the longitude and latitude location information of the faulty module and the module layout map of the photovoltaic power station.

In some feasible implementations, the data processing system 10 includes a data processing unit 102 and a photovoltaic inverter 101a connected to the photovoltaic string 2a. After the target location of the faulty module is determined, the photovoltaic inverter 101a may collect a first IV curve of the faulty module based on the target location, and collect a second IV curve of the normal module based on the adjacent location of the target location, to quickly collect an IV curve of a module based on the target location and the adjacent location of the target location. The data processing unit 102 may determine a first peak power of the faulty module based on the first IV curve, and determine the first peak power as the first power generation data of the faulty module. In this case, the data processing unit 102 may further determine a second peak power of the normal module based on the second IV curve, and determine the second peak power as the second power generation data of the normal module. Further, the data processing unit 102 may determine the annual lost energy yield of the faulty module based on the first peak power, the second peak power, and the preset energy yield of the photovoltaic power station. For example, the data processing unit 102 may determine the annual lost energy yield *Eₗₒₛₛ* of the faulty module based on Formula (1): ${E}_{loss} = \left({P}_{n}-{P}_{e}\right) ∗ {E}_{p}$ (1)

Herein, *Pₙ* may represent the first peak power, *Pₑ* may represent the second peak power, and *Eₚ* may represent the preset energy yield of the photovoltaic power station.

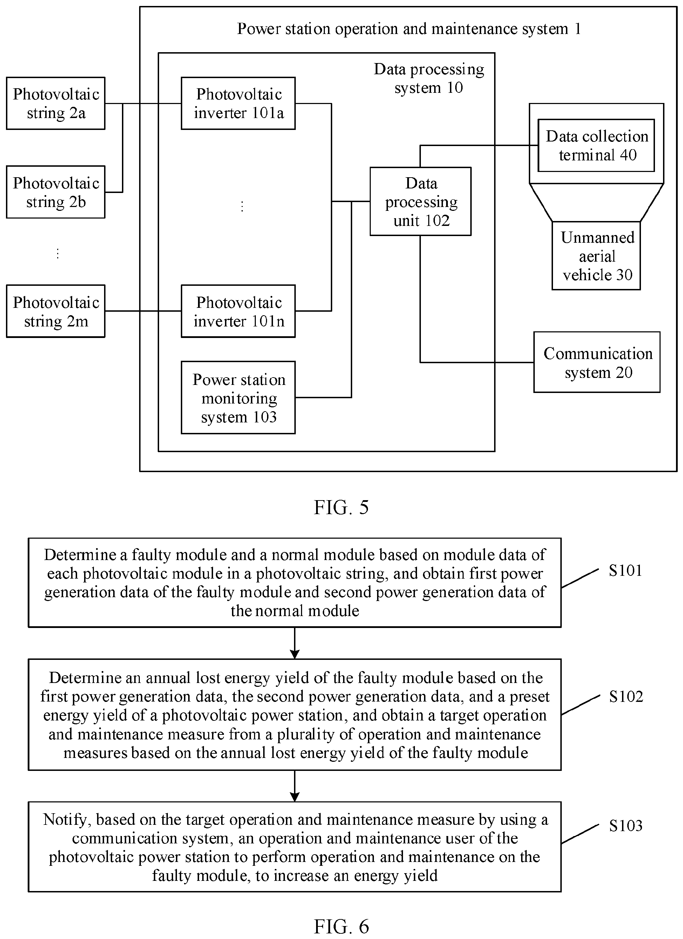

Optionally, in some feasible implementations, FIG. 5 is a schematic diagram of yet another structure of a power station operation and maintenance system according to this application. As shown in FIG. 5, the data processing system 10 shown in FIG. 3 includes a data processing unit 102, a power station monitoring system 103, and a photovoltaic inverter 101a to a photovoltaic inverter 101n that are connected to the photovoltaic string 2a to the photovoltaic string 2m. For ease of description, the photovoltaic inverter 101a is used as an example for description below, and details are not described below again. After determining the target location of the faulty module in the photovoltaic string 2a, the power station monitoring system 103 may collect a first energy yield of the faulty module in a target period (for example, N days) based on the target location, and collect a second energy yield of the normal module in the target period based on the adjacent location of the target location. The photovoltaic inverter 101a may collect an IV curve of the normal module based on the adjacent location of the target location. In this case, the data processing unit 102 may determine the first energy yield as the first power generation data of the faulty module, determine a peak power of the normal module based on the IV curve of the normal module, and determine the second energy yield and the peak power of the normal module as the second power generation data of the normal module. Further, the data processing unit 102 may determine the annual lost energy yield of the faulty module based on the first energy yield, the second energy yield, the peak power of the normal module, and the preset energy yield of the photovoltaic power station. For example, the data processing unit 102 may determine the annual lost energy yield *Eₗₒₛₛ* of the faulty module based on Formula (2): ${E}_{loss} = \left({E}_{n}-{E}_{e}\right) / {E}_{n} ∗ {P}_{n} ∗ {E}_{p}$ (2)

Herein, *Eₑ* may represent the first energy yield, *Eₙ* may represent the second energy yield, *Pₑ* may represent the peak power of the normal module (that is, the second peak power), and *Eₚ* may represent the preset energy yield of the photovoltaic power station.

Optionally, in some feasible implementations, after the annual lost energy yield of the faulty module is determined based on Formula (1) or Formula (2), the data processing system 10 (or the data processing unit 102) may obtain an operation and maintenance parameter of each operation and maintenance measure in the plurality of operation and maintenance measures, and obtain, based on the annual lost energy yield of the faulty module and the operation and maintenance parameter of each operation and maintenance measure, each operation and maintenance evaluation value corresponding to each operation and maintenance measure. The operation and maintenance parameter herein may include an operation and maintenance cost, a benefit parameter, and an on-grid power tariff (that is, a price of an energy yield). The benefit parameter may be determined by an annual energy yield that is increased based on the operation and maintenance measure, and the operation and maintenance cost includes a spare part cost, a replacement cost, and a transportation cost. For example, the data processing system 10 may determine, based on Formula (3), the operation and maintenance evaluation value *δₙ* corresponding to the operation and maintenance measure: ${δ}_{n} = {C}_{n} / \left({E}_{loss}∗{V}_{a}∗{F}_{n}\right)$ (3)

Herein, C*ₙ* may represent the operation and maintenance cost, *Eₗₒₛₛ* may represent the annual lost energy yield of the faulty module, *Vₐ* may represent the on-grid power tariff, and *Fₙ* may represent the benefit parameter.

After obtaining each operation and maintenance evaluation value corresponding to each operation and maintenance measure based on Formula (3), the data processing system 10 may further determine a smallest operation and maintenance evaluation value from all the operation and maintenance evaluation values, and when the smallest operation and maintenance evaluation value is less than an operation and maintenance evaluation threshold, determine an operation and maintenance measure with the smallest operation and maintenance evaluation value as a target operation and maintenance measure. The target operation and maintenance measure herein may be understood as an operation and maintenance measure recommended to the operation and maintenance user of the photovoltaic power station. The operation and maintenance evaluation threshold herein may be an expected investment payback period of the photovoltaic power station, and the expected investment payback period may be a default value configured for the photovoltaic power station or an expected value specified by the user. On the contrary, when the smallest operation and maintenance evaluation value is greater than the operation and maintenance evaluation threshold, the data processing system 10 does not recommend the operation and maintenance measure with the smallest operation and maintenance evaluation value to the operation and maintenance user of the photovoltaic power station. In this case, the operation and maintenance user of the photovoltaic power station may further view a specific fault of the faulty module to perform operation and maintenance on the faulty module.

Optionally, in some feasible implementations, the unmanned aerial vehicle 30 and the data collection terminal 40 may form a module data collection system in the power station operation and maintenance system 1. The module data collection system may collect the module data of each photovoltaic module in the photovoltaic string 2a. The data processing system 10 may be integrated with a faulty module analysis system, a faulty module positioning system, a faulty energy yield loss evaluation system, and an optimal operation and maintenance measure output system. The faulty module analysis system may perform artificial intelligence (artificial intelligence, AI) module fault analysis on the module data of each photovoltaic module, to diagnose a faulty module that has a hidden crack, shading, PID degradation, broken glass, and a short-circuited diode in the photovoltaic string 2a. The AI module fault analysis herein may include thermal infrared fault detection and/or short-wave infrared fault detection. The short-wave infrared fault detection may include electroluminescence (electroluminescence, EL) fault detection and photoluminescence (photoluminescence, PL) fault detection. Electroluminescence is a physical phenomenon that an electric field is generated based on a voltage applied to two electrodes, and an electron excited by the electric field touches a luminescence center, so that a transition between energy levels, a change, and a combination of electrons are caused to cause luminescence. Photoluminescence is a physical phenomenon that a substance absorbs a photon and then re-radiates the photon. Both of the two physical phenomena may be applied to perform short-wave infrared fault detection on the photovoltaic module. The faulty module positioning system may determine the longitude and latitude location information of the faulty module based on the photographing height, the photographing tilt angle, and the longitude and latitude information of the unmanned aerial vehicle 30 that are carried in the module image data of the faulty module, and determine the target location of the faulty module based on the longitude and latitude location information of the faulty module and the module layout map of the photovoltaic power station. The faulty energy yield loss evaluation system includes an energy yield loss calculation model 1 and an energy yield loss calculation model 2. The energy yield loss calculation model 1 may output the annual lost energy yield of the faulty module based on the first peak power, the second peak power, and the preset energy yield of the photovoltaic power station, and the energy yield loss calculation model 2 may output the annual lost energy yield of the faulty module based on the first energy yield, the second energy yield, the peak power of the normal module, and the preset energy yield of the photovoltaic power station. The optimal operation and maintenance measure output system may include a benefit and cost evaluation model. The benefit and cost evaluation model may output the target operation and maintenance measure (that is, an optimal operation and maintenance measure) based on the annual lost energy yield of the faulty module and the operation and maintenance parameter of each operation and maintenance measure, to implement intelligent operation and maintenance of the photovoltaic power station, and increase operation and maintenance efficiency of the photovoltaic module.

In some feasible implementations, the communication system 20 may recommend the target operation and maintenance measure to the operation and maintenance user of the photovoltaic power station, to notify the operation and maintenance user to perform operation and maintenance on the faulty module based on the target operation and maintenance measure. For example, the communication system 20 may output operation and maintenance information corresponding to the target operation and maintenance measure to a display interface of the power station monitoring system 103, to notify the operation and maintenance user to view the operation and maintenance information and perform operation and maintenance on the faulty module. Optionally, the data processing system 10 (or the data processing unit 102) may generate an operation and maintenance evaluation report based on the target operation and maintenance measure. In this case, the communication system 20 may send the operation and maintenance evaluation report to the operation and maintenance user, to notify the operation and maintenance user to perform operation and maintenance on the faulty module based on the operation and maintenance evaluation report. Optionally, the communication system 20 may further send, to a user terminal interface, an email or an SMS message that includes the operation and maintenance information corresponding to the target operation and maintenance measure, to notify the operation and maintenance user to view the operation and maintenance information and perform operation and maintenance on the faulty module. This may be specifically determined based on an actual application scenario, and is not limited herein.

In some feasible implementations, the communication system 20 may notify, based on the target operation and maintenance measure, the operation and maintenance user to replace a diode (for example, a diode that fails or is faulty) connected in parallel to the faulty module, to increase the energy yield. Optionally, the communication system 20 may notify, based on the target operation and maintenance measure, the operation and maintenance user to connect an optimizer (a module optimization apparatus) at two ends of the faulty module in parallel, to adjust a voltage, a current, and/or an output power of the faulty module, so as to increase the energy yield. In this case, the faulty module usually has faults such as power degradation, a hidden crack, shading, and different electrical performance. These faults may be considered as faults that may be optimized and that much affect the energy yield. Optionally, the communication system 20 may notify, based on the target operation and maintenance measure, the operation and maintenance user to replace the faulty module, to increase the energy yield. In this case, the faulty module is usually a module with a serious fault, for example, a completely damaged module.

In some feasible implementations, the communication system 20 may notify, based on the target operation and maintenance measure (that is, a reverse excitation correction measure), the operation and maintenance user to connect an external device at two ends of the faulty module in parallel, to apply a reverse voltage or a reverse current to the two ends of the faulty module, so as to increase the energy yield. In this case, the faulty module is usually a module with a correctable fault, and the correctable fault may include light induced degradation and aging degradation. Optionally, the communication system 20 may notify, based on the target operation and maintenance measure, the operation and maintenance user to apply a positive voltage to a voltage to earth of the faulty module, so as to increase the energy yield. In this case, the faulty module is usually a module with a correctable fault, and the correctable fault may include a module with potential induced degradation. Optionally, the communication system 20 may notify, based on the target operation and maintenance measure, the operation and maintenance user not to process the faulty module. In this case, the faulty module usually has a minor fault and has a small lost energy yield. Therefore, the operation and maintenance measure may not be processed. It can be learned that, different target operation and maintenance measures may be used to perform operation and maintenance on modules with different types of faults, to optimally increase the energy yield of the module at lowest costs and increase benefits of the photovoltaic power station.

FIG. 6 is a schematic flowchart of a power station operation and maintenance method according to this application. The power station operation and maintenance method provided in this application is applicable to the data processing system of the power station operation and maintenance system provided in FIG. 2 to FIG. 5. As shown in FIG. 6, the method may include step S101 to step S103.

Step S101: Determine a faulty module and a normal module based on module data of each photovoltaic module in a photovoltaic string, and obtain first power generation data of the faulty module and second power generation data of the normal module.

In some feasible implementations, the data processing system may collect module image data of each photovoltaic module by using a data collection terminal. The module image data herein carries a photographing height, a photographing tilt angle, and longitude and latitude information of an unmanned aerial vehicle that exist when the data collection terminal photographs the photovoltaic module. In this case, the data processing system may determine the faulty module based on the module image data of each photovoltaic module, and determine longitude and latitude location information of the faulty module based on the photographing height, the photographing tilt angle, and the longitude and latitude information of the unmanned aerial vehicle that are in the module image data of the faulty module. Optionally, the data processing system may scan an IV curve of each photovoltaic string by using each photovoltaic inverter, and determine a faulty photovoltaic string based on the IV curve of each photovoltaic string. Further, the data processing system may collect the module image data of each photovoltaic module in the faulty photovoltaic string by using the data collection terminal, determine the faulty module based on the module image data of each photovoltaic module, and determine the longitude and latitude location information of the faulty module based on the photographing height, the photographing tilt angle, and the longitude and latitude information of the unmanned aerial vehicle that are in module image data of the faulty module. This may be specifically determined based on an actual application scenario, and is not limited herein.

In some feasible implementations, after obtaining the longitude and latitude location information of the faulty module, the data processing system may determine a target location of the faulty module based on the longitude and latitude location information of the faulty module and a module layout map of a photovoltaic power station. Further, the data processing system may obtain the first power generation data of the faulty module based on the target location, and obtain the second power generation data of the normal module based on an adjacent location (or a near location) of the target location in the module layout map.

In some feasible implementations, the data processing system may collect a first IV curve of the faulty module based on the target location by using the photovoltaic inverter, and collect a second IV curve of the normal module based on the adjacent location of the target location in the module layout map. Further, the data processing system may determine a first peak power of the faulty module based on the first IV curve, and determine the first peak power as the first power generation data of the faulty module. In this case, the data processing system may determine a second peak power of the normal module based on the second IV curve, and determine the second peak power as the second power generation data of the normal module.

Optionally, in some feasible implementations, the data processing system may collect a first energy yield of the faulty module in a target period based on the target location by using a power station monitoring system, and collect, based on the adjacent location of the target location in the module layout map, a second energy yield of the normal module in the target period. The data processing system may collect an IV curve of the normal module based on the adjacent location of the target location by using the photovoltaic inverter. Further, the data processing system may determine the first energy yield as the first power generation data of the faulty module, determine a peak power of the normal module based on the IV curve of the normal module, and determine the second energy yield and the peak power of the normal module as the second power generation data of the normal module.

Step S102: Determine an annual lost energy yield of the faulty module based on the first power generation data, the second power generation data, and a preset energy yield of the photovoltaic power station, and obtain a target operation and maintenance measure from a plurality of operation and maintenance measures based on the annual lost energy yield of the faulty module.

In some feasible implementations, the data processing system may determine the annual lost energy yield of the faulty module based on the first peak power, the second peak power, and the preset energy yield of the photovoltaic power station. For example, a data processing unit 102 may determine the annual lost energy yield *Eₗₒₛₛ* of the faulty module based on Formula (1): ${E}_{loss} = \left({P}_{n}-{P}_{e}\right) ∗ {E}_{p}$ (1)

Herein, *Pₙ* may represent the first peak power, *Pₑ* may represent the second peak power, and *Eₚ* may represent the preset energy yield of the photovoltaic power station.

Optionally, in some feasible implementations, the data processing system may determine the annual lost energy yield of the faulty module based on the first energy yield, the second energy yield, the peak power of the normal module, and the preset energy yield of the photovoltaic power station. For example, a data processing unit 102 may determine the annual lost energy yield *Eₗₒₛₛ* of the faulty module based on Formula (2): ${E}_{loss} = \left({E}_{n}-{E}_{e}\right) / {E}_{n} ∗ {P}_{n} ∗ {E}_{p}$ (2)

Herein, *Eₑ* may represent the first energy yield, *Eₙ* may represent the second energy yield, *Pₑ* may represent the peak power of the normal module (that is, the second peak power), and *Eₚ* may represent the preset energy yield of the photovoltaic power station.

In some feasible implementations, the data processing system may obtain an operation and maintenance parameter of each operation and maintenance measure in the plurality of operation and maintenance measures, and obtain, based on the annual lost energy yield of the faulty module and the operation and maintenance parameter of each operation and maintenance measure, each operation and maintenance evaluation value corresponding to each operation and maintenance measure. The operation and maintenance parameter herein may include an operation and maintenance cost, a benefit parameter, and an on-grid power tariff, the benefit parameter may be determined by an annual energy yield that is increased based on the operation and maintenance measure, and the operation and maintenance cost includes a spare part cost, a replacement cost, and a transportation cost. The plurality of operation and maintenance measures include diode replacement, optimizer installation, module replacement, module activation and repair, and another operation and maintenance measure. For example, the data processing system 10 may determine, based on Formula (3), the operation and maintenance evaluation value *δₙ* corresponding to the operation and maintenance measure: ${δ}_{n} = {C}_{n} / \left({E}_{loss}∗{V}_{a}∗{F}_{n}\right)$ (3)

Herein, C*ₙ* may represent the operation and maintenance cost, *Eₗₒₛₛ* may represent the annual lost energy yield of the faulty module, *Vₐ* may represent the on-grid power tariff, and *Fₙ* may represent the benefit parameter.

After obtaining each operation and maintenance evaluation value corresponding to each operation and maintenance measure based on Formula (3), the data processing system may determine a smallest operation and maintenance evaluation value from all the operation and maintenance evaluation values, and when the smallest operation and maintenance evaluation value is less than an operation and maintenance evaluation threshold, determine an operation and maintenance measure with the smallest operation and maintenance evaluation value as a target operation and maintenance measure. On the contrary, when the smallest operation and maintenance evaluation value is greater than the operation and maintenance evaluation threshold, the data processing system does not recommend the operation and maintenance measure with the smallest operation and maintenance evaluation value to the operation and maintenance user of the photovoltaic power station. In this case, the operation and maintenance user of the photovoltaic power station may further view a specific fault of the faulty module to perform operation and maintenance on the faulty module.

Step S103: Notify, based on the target operation and maintenance measure by using a communication system, an operation and maintenance user of the photovoltaic power station to perform operation and maintenance on the faulty module, to increase an energy yield.

In some feasible implementations, the data processing system may recommend the target operation and maintenance measure to the operation and maintenance user of the photovoltaic power station by using the communication system, to notify the operation and maintenance user to perform operation and maintenance on the faulty module based on the target operation and maintenance measure. For example, the data processing system may output, by using the communication system, operation and maintenance information corresponding to the target operation and maintenance measure to a display interface of the power station monitoring system, to notify the operation and maintenance user to view the operation and maintenance information and perform operation and maintenance on the faulty module. Optionally, the data processing system may generate an operation and maintenance evaluation report based on the target operation and maintenance measure, and send the operation and maintenance evaluation report to the operation and maintenance user by using the communication system, to notify the operation and maintenance user to perform operation and maintenance on the faulty module based on the operation and maintenance evaluation report. Optionally, the data processing system may send, to a user terminal interface by using the communication system, an email or an SMS message that includes the operation and maintenance information corresponding to the target operation and maintenance measure, to notify the operation and maintenance user to view the operation and maintenance information and perform operation and maintenance on the faulty module. This may be specifically determined based on an actual application scenario, and is not limited herein.

In some feasible implementations, the data processing system may notify, based on the target operation and maintenance measure by using the communication system, the operation and maintenance user of the photovoltaic power station to replace a diode (for example, a diode that fails or is faulty) connected in parallel to the faulty module, to increase the energy yield. Optionally, the data processing system may notify, based on the target operation and maintenance measure by using the communication system, the operation and maintenance user of the photovoltaic power station to connect an optimizer (a module optimization apparatus) at two ends of the faulty module in parallel, to adjust a voltage, a current, and/or an output power of the faulty module, so as to increase the energy yield. In this case, the faulty module usually has faults such as power degradation, a hidden crack, shading, and different electrical performance. These faults may be considered as faults that may be optimized and that much affect the energy yield. Optionally, the data processing system may notify, based on the target operation and maintenance measure by using the communication system, the operation and maintenance user of the photovoltaic power station to replace the faulty module, to increase the energy yield. In this case, the faulty module is usually a module with a serious fault, for example, a completely damaged module.

In some feasible implementations, the data processing system may notify, based on the target operation and maintenance measure (that is, a reverse excitation correction measure) by using the communication system, the operation and maintenance user of the photovoltaic power station to connect an external device at two ends of the faulty module in parallel, to apply a reverse voltage or a reverse current to the two ends of the faulty module, so as to increase the energy yield. In this case, the faulty module is usually a module with a correctable fault, and the correctable fault may include light induced degradation and aging degradation. Optionally, the data processing system may notify, based on the target operation and maintenance measure by using the communication system, the operation and maintenance user of the photovoltaic power station to apply a positive voltage to a voltage to earth of the faulty module, to increase the energy yield. In this case, the faulty module is usually a module with a correctable fault, and the correctable fault may include a module with potential induced degradation. Optionally, the data processing system may notify, based on the target operation and maintenance measure by using the communication system, the operation and maintenance user not to process the faulty module. In this case, the faulty module usually has a minor fault and has a small lost energy yield. Therefore, the operation and maintenance measure may not be processed.

In a specific implementation, for more operations performed by the data processing system in the power station operation and maintenance method provided in this application, refer to the implementations performed by the data processing system in the power station operation and maintenance system shown in FIG. 2 to FIG. 5 and the working principles of the data processing system. Details are not described herein again.

In this application, a quantitative analysis may be performed on an energy yield loss of the faulty module. In addition, an energy yield of a module can be increased optimally at low cost costs, and diversity of operation and maintenance measures is improved. Low costs and a convenient operation further improve an energy yield and health of the photovoltaic power station. This is more applicable.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power station operation and maintenance system (1), wherein the power station operation and maintenance system (1) is applicable to a photovoltaic power station, the photovoltaic power station comprises a photovoltaic string (2), and the power station operation and maintenance system (1) comprises a data processing system (10) and a communication system (20);
the data processing system (10) is configured to: determine a faulty module and a normal module based on module data of each photovoltaic module in the photovoltaic string (2), and obtain first power generation data of the faulty module and second power generation data of the normal module;
the data processing system (10) is further configured to: determine an annual lost energy yield of the faulty module based on the first power generation data, the second power generation data, and a preset energy yield of the photovoltaic power station, and obtain a target operation and maintenance measure from a plurality of operation and maintenance measures based on the annual lost energy yield; and
the communication system (20) is configured to notify, based on the target operation and maintenance measure, an operation and maintenance user of the photovoltaic power station to perform operation and maintenance on the faulty module, to increase an energy yield,
wherein the data processing system (10) is configured to: obtain longitude and latitude location information of the faulty module, and determine a target location of the faulty module based on the longitude and latitude location information of the faulty module and a module layout map of the photovoltaic power station; and
the data processing system (10) is further configured to: obtain the first power generation data of the faulty module based on the target location, and obtain the second power generation data of the normal module based on an adjacent location of the target location in the module layout map,
wherein the data processing system (10) comprises a data processing unit (102) and a photovoltaic inverter (101) connected to the photovoltaic string (2);
the photovoltaic inverter (101) is configured to: collect a first IV curve of the faulty module based on the target location, and collect a second IV curve of the normal module based on the adjacent location of the target location;
the data processing unit (102) is configured to: determine a first peak power of the faulty module based on the first IV curve, and determine the first peak power as the first power generation data of the faulty module; and
the data processing unit (102) is configured to: determine a second peak power of the normal module based on the second IV curve, and determine the second peak power as the second power generation data of the normal module; or
wherein the data processing system (10) comprises a data processing unit (102), a power station monitoring system (103), and a photovoltaic inverter (101) connected to the photovoltaic string (2);
the power station monitoring system (103) is configured to: collect, based on the target location, a first energy yield of the faulty module in a target period, and collect, based on the adjacent location of the target location, a second energy yield of the normal module in the target period; and the photovoltaic inverter (101) is configured to collect an IV curve of the normal module based on the adjacent location of the target location; and
the data processing unit (102) is configured to: determine the first energy yield as the first power generation data of the faulty module, determine a peak power of the normal module based on the IV curve of the normal module, and determine the second energy yield and the peak power of the normal module as the second power generation data of the normal module.

2. The system according to claim 1, wherein the module data comprises module image data, and the power station operation and maintenance system further comprises an unmanned aerial vehicle (30) and a data collection terminal (40) disposed on the unmanned aerial vehicle (30);
the data collection terminal (40) is configured to collect the module image data of each photovoltaic module, wherein the module image data carries a photographing height, a photographing tilt angle, and longitude and latitude information of the unmanned aerial vehicle (30) that exist when the data collection terminal photographs the photovoltaic module; and
the data processing system is further configured to: determine the faulty module based on the module image data of each photovoltaic module, and determine the longitude and latitude location information of the faulty module based on the photographing height, the photographing tilt angle, and the longitude and latitude information of the unmanned aerial vehicle (30) that are in module image data of the faulty module.

3. The system according to claim 2, wherein the module data further comprises an IV curve, the photovoltaic power station comprises a plurality of photovoltaic strings, and the data processing system comprises a data processing unit and at least one photovoltaic inverter connected to the plurality of photovoltaic strings;
each photovoltaic inverter is configured to collect an IV curve of each photovoltaic string, and the data processing unit is configured to determine a faulty photovoltaic string based on the IV curve of each photovoltaic string; and
the data collection terminal is configured to collect module image data of each photovoltaic module in the faulty photovoltaic string.

4. The system according to any one of claims 1 to 3, wherein the data processing system is configured to: obtain an operation and maintenance parameter of each operation and maintenance measure in the plurality of operation and maintenance measures, and obtain, based on the annual lost energy yield of the faulty module and the operation and maintenance parameter of each operation and maintenance measure, each operation and maintenance evaluation value corresponding to each operation and maintenance measure; and
the data processing system is further configured to: determine a smallest operation and maintenance evaluation value from all the operation and maintenance evaluation values, and when the smallest operation and maintenance evaluation value is less than an operation and maintenance evaluation threshold, determine an operation and maintenance measure with the smallest operation and maintenance evaluation value as a target operation and maintenance measure, wherein
the operation and maintenance parameter comprises an operation and maintenance cost, a benefit parameter, and an on-grid power tariff, and the benefit parameter is determined by an annual energy yield that is increased based on the operation and maintenance measure.

5. The system according to any one of claims 1 to 4, wherein the communication system is configured to notify, based on the target operation and maintenance measure, the operation and maintenance user to replace a diode connected in parallel to the faulty module, to increase the energy yield.

6. The system according to any one of claims 1 to 4, wherein the communication system is configured to notify, based on the target operation and maintenance measure, the operation and maintenance user to connect an optimizer at two ends of the faulty module in parallel, to adjust a voltage, a current, and/or an output power of the faulty module, so as to increase the energy yield.

7. The system according to any one of claims 1 to 4, wherein the communication system is configured to notify, based on the target operation and maintenance measure, the operation and maintenance user to replace the faulty module, to increase the energy yield.

8. The system according to any one of claims 1 to 4, wherein the communication system is configured to notify, based on the target operation and maintenance measure, the operation and maintenance user to connect an external device at two ends of the faulty module in parallel, to apply a reverse voltage or a reverse current to the two ends of the faulty module, so as to increase the energy yield.

9. The system according to any one of claims 1 to 4, wherein the communication system is configured to notify, based on the target operation and maintenance measure, the operation and maintenance user to apply a positive voltage to a voltage to earth of the faulty module, so as to increase the energy yield.

10. A power station operation and maintenance method, wherein the method is applied to
the data processing system (10) in the power station operation and maintenance system (1) according to any one of claims 1 to 9, and the method comprises:
determining (S101) a faulty module and a normal module based on module data of each photovoltaic module in the photovoltaic string, and obtaining first power generation data of the faulty module and second power generation data of the normal module;
determining (S102) an annual lost energy yield of the faulty module based on the first power generation data, the second power generation data, and a preset energy yield of the photovoltaic power station, and obtaining a target operation and maintenance measure from a plurality of operation and maintenance measures based on the annual lost energy yield of the faulty module; and
notifying (S103), based on the target operation and maintenance measure by using a communication system, an operation and maintenance user of the photovoltaic power station to perform operation and maintenance on the faulty module, to increase an energy yield.

11. The method according to claim 10, wherein before the obtaining first power generation data of the faulty module and second power generation data of the normal module, the method comprises:
obtaining longitude and latitude location information of the faulty module, and determining a target location of the faulty module based on the longitude and latitude location information of the faulty module and a module layout map of the photovoltaic power station; and
the obtaining first power generation data of the faulty module and second power generation data of the normal module comprises:
obtaining the first power generation data of the faulty module based on the target location, and obtaining the second power generation data of the normal module based on an adjacent location of the target location in the module layout map.

12. The method according to claim 11, wherein the obtaining longitude and latitude location information of the faulty module comprises:
collecting the module image data of each photovoltaic module by using a data collection terminal, wherein the module image data carries a photographing height, a photographing tilt angle, and longitude and latitude information of the unmanned aerial vehicle that exist when the data collection terminal photographs the photovoltaic module; and
determining the faulty module based on the module image data of each photovoltaic module, and determining the longitude and latitude location information of the faulty module based on the photographing height, the photographing tilt angle, and the longitude and latitude information of the unmanned aerial vehicle that are in module image data of the faulty module.

## Patentansprüche

1. Kraftwerksbetriebs- und -wartungssystem (1), wobei das Kraftwerksbetriebs- und - wartungssystem (1) auf ein Photovoltaikkraftwerk anwendbar ist, das Photovoltaikkraftwerk einen Photovoltaikstrang (2) umfasst und das Kraftwerksbetriebs- und -wartungssystem (1) ein Datenverarbeitungssystem (10) und ein Kommunikationssystem (20) umfasst;
das Datenverarbeitungssystem (10) konfiguriert ist zum: Bestimmen eines fehlerhaften Moduls und eines normalen Moduls basierend auf Moduldaten jedes Photovoltaikmoduls in dem Photovoltaikstrang (2), und Erhalten erster Leistungserzeugungsdaten des fehlerhaften Moduls und zweiter Leistungserzeugungsdaten des normalen Moduls;
das Datenverarbeitungssystem (10) ferner konfiguriert ist zum: Bestimmen eines jährlichen Energieertragsverlusts des fehlerhaften Moduls basierend auf den ersten Leistungserzeugungsdaten, den zweiten Leistungserzeugungsdaten und einem vorgegebenen Energieertrag des Photovoltaikkraftwerks, und Erhalten einer Ziel-Betriebs- und Wartungsmaßnahme aus einer Vielzahl von Betriebs- und Wartungsmaßnahmen basierend auf dem jährlichen Energieertragsverlust; und
das Kommunikationssystem (20) konfiguriert ist, um basierend auf der Ziel-Betriebs- und Wartungsmaßnahme einen Betriebs- und Wartungsbenutzers des Photovoltaikkraftwerks zu benachrichtigen, Betrieb und Wartung an dem fehlerhaften Modul durchzuführen, um einen Energieertrag zu erhöhen,
wobei das Datenverarbeitungssystem (10) konfiguriert ist zum: Erhalten von Längen- und Breitengrad-Standortinformationen des fehlerhaften Moduls, und Bestimmen eines Zielstandorts des fehlerhaften Moduls basierend auf den Längen- und Breitengrad-Standortinformationen des fehlerhaften Moduls und einer Modullayoutkarte des Photovoltaikkraftwerks; und
das Datenverarbeitungssystem (10) ferner konfiguriert ist zum: Erhalten der ersten Leistungserzeugungsdaten des fehlerhaften Moduls basierend auf dem Zielstandort, und Erhalten der zweiten Leistungserzeugungsdaten des normalen Moduls basierend auf einem zu dem Zielstandort benachbarten Standort in der Modullayoutkarte, wobei das Datenverarbeitungssystem (10) eine Datenverarbeitungseinheit (102) und einen mit dem Photovoltaikstrang (2) verbundenen Photovoltaikwechselrichter (101) umfasst;
der Photovoltaikwechselrichter (101) konfiguriert ist zum: Erfassen einer ersten IV-Kurve des fehlerhaften Moduls basierend auf dem Zielstandort, und Erfassen einer zweiten IV-Kurve des normalen Moduls basierend auf dem zu dem Zielstandort benachbarten Standort;
die Datenverarbeitungseinheit (102) konfiguriert ist zum: Bestimmen einer ersten Spitzenleistung des fehlerhaften Moduls basierend auf der ersten IV-Kurve, und Bestimmen der ersten Spitzenleistung als die ersten Leistungserzeugungsdaten des fehlerhaften Moduls; und
die Datenverarbeitungseinheit (102) konfiguriert ist zum: Bestimmen einer zweiten Spitzenleistung des normalen Moduls basierend auf der zweiten IV-Kurve, und Bestimmen der zweiten Spitzenleistung als die zweiten Leistungserzeugungsdaten des normalen Moduls; oder
wobei das Datenverarbeitungssystem (10) eine Datenverarbeitungseinheit (102), ein Kraftwerksüberwachungssystem (103) und einen mit dem Photovoltaikstrang (2) verbundenen Photovoltaikwechselrichter (101) umfasst;
das Kraftwerksüberwachungssystem (103) konfiguriert ist zum: Erfassen, basierend auf dem Zielstandort, eines ersten Energieertrags des fehlerhaften Moduls in einem Zielzeitraum, und Erfassen, basierend auf dem zu dem Zielstandort benachbarten Standort, eines zweiten Energieertrags des normalen Moduls in dem Zielzeitraum; und der Photovoltaikwechselrichter (101) konfiguriert ist, um eine IV-Kurve des normalen Moduls basierend auf dem zu dem Zielstandort benachbarten Standort zu erfassen; und
die Datenverarbeitungseinheit (102) konfiguriert ist zum: Bestimmen des ersten Energieertrags als die ersten Leistungserzeugungsdaten des fehlerhaften Moduls, Bestimmen einer Spitzenleistung des normalen Moduls basierend auf der IV-Kurve des normalen Moduls, und Bestimmen des zweiten Energieertrags und der Spitzenleistung des normalen Moduls als die zweiten Leistungserzeugungsdaten des normalen Moduls.

2. System nach Anspruch 1, wobei die Moduldaten Modulbilddaten umfassen und das Kraftwerksbetriebs- und -wartungssystem ferner ein unbemanntes Luftfahrzeug (30) und ein an dem unbemannten Luftfahrzeug (30) angeordnetes Datenerfassungsendgerät (40) umfasst;
das Datenerfassungsendgerät (40) konfiguriert ist, um die Modulbilddaten jedes Photovoltaikmoduls zu erfassen, wobei die Modulbilddaten eine Aufnahmehöhe, einen Aufnahmeneigungswinkel und Längen- und Breitengradinformationen des unbemannten Luftfahrzeugs (30) enthalten, die vorliegen, wenn das Datenerfassungsendgerät das Photovoltaikmodul aufnimmt; und
das Datenverarbeitungssystem ferner konfiguriert ist zum: Bestimmen des fehlerhaften Moduls basierend auf den Modulbilddaten jedes Photovoltaikmoduls, und Bestimmen der Längen- und Breitengrad-Standortinformationen des fehlerhaften Moduls basierend auf der Aufnahmehöhe, dem Aufnahmeneigungswinkel und den Längen- und Breitengradinformationen des unbemannten Luftfahrzeugs (30), die in den Modulbilddaten des fehlerhaften Moduls sind.

3. System nach Anspruch 2, wobei die Moduldaten ferner eine IV-Kurve umfassen, das Photovoltaikkraftwerk eine Vielzahl von Photovoltaiksträngen umfasst und das Datenverarbeitungssystem eine Datenverarbeitungseinheit und mindestens einen Photovoltaikwechselrichter, der mit der Vielzahl von Photovoltaiksträngen verbunden ist, umfasst;
jeder Photovoltaikwechselrichter konfiguriert ist, um eine IV-Kurve jedes Photovoltaikstrangs zu erfassen, und die Datenverarbeitungseinheit konfiguriert ist, um basierend auf der IV-Kurve jedes Photovoltaikstrangs einen fehlerhaften Photovoltaikstrang zu bestimmen; und
das Datenerfassungsendgerät konfiguriert ist, um Modulbilddaten jedes Photovoltaikmoduls in dem fehlerhaften Photovoltaikstrang zu erfassen.

4. System nach einem der Ansprüche 1 bis 3, wobei das Datenverarbeitungssystem konfiguriert ist zum: Erhalten eines Betriebs- und Wartungsparameters jeder Betriebs- und Wartungsmaßnahme aus der Vielzahl von Betriebs- und Wartungsmaßnahmen, und Erhalten, basierend auf dem jährlichen Energieertragsverlust des fehlerhaften Moduls und dem Betriebs- und Wartungsparameter jeder Betriebs- und Wartungsmaßnahme, jedes Betriebs- und Wartungsbewertungswerts, der jeder Betriebs- und Wartungsmaßnahme entspricht; und
das Datenverarbeitungssystem ferner konfiguriert ist zum: Bestimmen eines kleinsten Betriebs- und Wartungsbewertungswerts aus allen Betriebs- und Wartungsbewertungswerten, und wenn der kleinste Betriebs- und Wartungsbewertungswert kleiner als ein Betriebs- und Wartungsbewertungsschwellenwert ist, Bestimmen einer Betriebs- und Wartungsmaßnahme mit dem kleinsten Betriebs- und Wartungsbewertungswert als eine Ziel-Betriebs- und Wartungsmaßnahme, wobei
der Betriebs- und Wartungsparameter Betriebs- und Wartungskosten, einen Nutzenparameter und einen Netzleistungstarif umfasst und der Nutzenparameter durch einen jährlichen Energieertrag, der basierend auf der Betriebs- und Wartungsmaßnahme erhöht wird, bestimmt wird.

5. System nach einem der Ansprüche 1 bis 4, wobei das Kommunikationssystem konfiguriert ist, um basierend auf der Ziel-Betriebs- und Wartungsmaßnahme den Betriebs- und Wartungsbenutzer zu benachrichtigen, eine parallel zu dem fehlerhaften Modul geschaltete Diode auszutauschen, um den Energieertrag zu erhöhen.

6. System nach einem der Ansprüche 1 bis 4, wobei das Kommunikationssystem konfiguriert ist, um basierend auf der Ziel-Betriebs- und Wartungsmaßnahme den Betriebs- und Wartungsbenutzer zu benachrichtigen, einen Optimierer an zwei Enden des fehlerhaften Moduls parallel zu schalten, um eine Spannung, einen Strom und/oder eine Ausgangsleistung des fehlerhaften Moduls anzupassen, sodass der Energieertrag erhöht wird.

7. System nach einem der Ansprüche 1 bis 4, wobei das Kommunikationssystem konfiguriert ist, um basierend auf der Ziel-Betriebs- und Wartungsmaßnahme den Betriebs- und Wartungsbenutzer zu benachrichtigen, das fehlerhafte Modul auszutauschen, um den Energieertrag zu erhöhen.

8. System nach einem der Ansprüche 1 bis 4, wobei das Kommunikationssystem konfiguriert ist, um basierend auf der Ziel-Betriebs- und Wartungsmaßnahme den Betriebs- und Wartungsbenutzer zu benachrichtigen, eine externe Vorrichtung an zwei Enden des fehlerhaften Moduls parallel zu schalten, um eine Rückspannung oder einen Rückstrom auf die zwei Enden des fehlerhaften Moduls anzuwenden, um den Energieertrag zu erhöhen.

9. System nach einem der Ansprüche 1 bis 4, wobei das Kommunikationssystem konfiguriert ist, um basierend auf der Ziel-Betriebs- und Wartungsmaßnahme den Betriebs- und Wartungsbenutzer zu benachrichtigen, eine positive Spannung auf eine Spannung gegen Erde des fehlerhaften Moduls anzuwenden, um den Energieertrag zu erhöhen.

10. Kraftwerksbetriebs- und -wartungsverfahren, wobei das Verfahren auf das Datenverarbeitungssystem (10) in dem Kraftwerksbetriebs- und -wartungssystem (1) nach einem der Ansprüche 1 bis 9 angewendet wird, und das Verfahren umfasst:
Bestimmen (S101) eines fehlerhaften Moduls und eines normalen Moduls basierend auf Moduldaten jedes Photovoltaikmoduls in dem Photovoltaikstrang, und Erhalten erster Leistungserzeugungsdaten des fehlerhaften Moduls und zweiter Leistungserzeugungsdaten des normalen Moduls;
Bestimmen (S102) eines jährlichen Energieertragsverlusts des fehlerhaften Moduls basierend auf den ersten Leistungserzeugungsdaten, den zweiten Leistungserzeugungsdaten und einem vorgegebenen Energieertrag des Photovoltaikkraftwerks, und Erhalten einer Ziel-Betriebs- und Wartungsmaßnahme aus einer Vielzahl von Betriebs- und Wartungsmaßnahmen basierend auf dem jährlichen Energieertragsverlust des fehlerhaften Moduls; und
Benachrichtigen (S103) eines Betriebs- und Wartungsbenutzers des Photovoltaikkraftwerks basierend auf der Ziel-Betriebs- und Wartungsmaßnahme durch Verwenden eines Kommunikationssystems, Betrieb und Wartung an dem fehlerhaften Modul durchzuführen, um einen Energieertrag zu erhöhen.

11. Verfahren nach Anspruch 10, wobei vor dem Erhalten erster Leistungserzeugungsdaten des fehlerhaften Moduls und zweiter Leistungserzeugungsdaten des normalen Moduls das Verfahren umfasst:
Erhalten von Längen- und Breitengrad-Standortinformationen des fehlerhaften Moduls, und Bestimmen einer Zielstandorts des fehlerhaften Moduls basierend auf den Längen- und Breitengrad-Standortinformationen des fehlerhaften Moduls und einer Modullayoutkarte des Photovoltaikkraftwerks; und
wobei das Erhalten erster Leistungserzeugungsdaten des fehlerhaften Moduls und zweiter Leistungserzeugungsdaten des normalen Moduls umfasst:
Erhalten der ersten Leistungserzeugungsdaten des fehlerhaften Moduls basierend auf dem Zielstandort, und Erhalten der zweiten Leistungserzeugungsdaten des normalen Moduls basierend auf einem zu dem Zielstandort benachbarten Standort in der Modullayoutkarte.

12. Verfahren nach Anspruch 11, wobei das Erhalten von Längen- und Breitengrad-Standortinformationen des fehlerhaften Moduls umfasst:
Erfassen der Modulbilddaten jedes Photovoltaikmoduls durch Verwenden eines Datenerfassungsendgeräts, wobei die Modulbilddaten eine Aufnahmehöhe, einen Aufnahmeneigungswinkel und Längen- und Breitengradinformationen des unbemannten Luftfahrzeugs enthalten, die vorliegen, wenn das Datenerfassungsendgerät das Photovoltaikmodul aufnimmt; und
Bestimmen des fehlerhaften Moduls basierend auf den Modulbilddaten jedes Photovoltaikmoduls, und Bestimmen der Längen- und Breitengrad-Standortinformationen des fehlerhaften Moduls basierend auf der Aufnahmehöhe, dem Aufnahmeneigungswinkel und den Längen- und Breitengradinformationen des unbemannten Luftfahrzeugs, die in den Modulbilddaten des fehlerhaften Moduls sind.

## Revendications

1. Système d'exploitation et de maintenance de centrale électrique (1), dans lequel le système d'exploitation et de maintenance de centrale électrique (1) est applicable à une centrale électrique photovoltaïque, la centrale électrique photovoltaïque comprend une chaîne photovoltaïque (2), et le système d'exploitation et de maintenance de centrale électrique (1) comprend un système de traitement de données (10) et un système de communication (20) ;
le système de traitement de données (10) est configuré pour : déterminer un module défectueux et un module normal sur la base de données de module de chaque module photovoltaïque de la chaîne photovoltaïque (2), et obtenir des premières données de production d'énergie du module défectueux et des secondes données de production d'énergie du module normal ;
le système de traitement de données (10) est en outre configuré pour : déterminer une perte de rendement énergétique annuelle du module défectueux sur la base des premières données de production d'énergie, des secondes données de production d'énergie et d'un rendement énergétique prédéfini de la centrale électrique photovoltaïque, et obtenir une mesure d'exploitation et de maintenance cible parmi une pluralité de mesures d'exploitation et de maintenance sur la base de la perte de rendement énergétique annuelle ; et
le système de communication (20) est configuré pour notifier, sur la base de la mesure d'exploitation et de maintenance cible, à un utilisateur d'exploitation et de maintenance de la centrale électrique photovoltaïque d'effectuer une exploitation et une maintenance du module défectueux, afin d'augmenter un rendement énergétique,
dans lequel le système de traitement de données (10) est configuré pour : obtenir des informations de localisation de longitude et de latitude du module défectueux, et déterminer un emplacement cible du module défectueux sur la base des informations de localisation de longitude et de latitude du module défectueux et d'une carte de disposition de modules de la centrale électrique photovoltaïque ; et
le système de traitement de données (10) est en outre configuré pour : obtenir les premières données de production d'énergie du module défectueux sur la base de l'emplacement cible, et obtenir les secondes données de production d'énergie du module normal sur la base d'un emplacement adjacent à l'emplacement cible dans la carte de disposition de modules,
dans lequel le système de traitement de données (10) comprend une unité de traitement de données (102) et un onduleur photovoltaïque (101) connecté à la chaîne photovoltaïque (2) ;
l'onduleur photovoltaïque (101) est configuré pour : collecter une première courbe IV du module défectueux sur la base de l'emplacement cible, et collecter une seconde courbe IV du module normal sur la base de l'emplacement adjacent à l'emplacement cible ; l'unité de traitement de données (102) est configurée pour : déterminer une première puissance de crête du module défectueux sur la base de la première courbe IV, et déterminer la première puissance de crête en tant que premières données de production d'énergie du module défectueux ; et
l'unité de traitement de données (102) est configurée pour : déterminer une seconde puissance de crête du module normal sur la base de la seconde courbe IV, et déterminer la seconde puissance de crête en tant que secondes données de production d'énergie du module normal ; ou
dans lequel le système de traitement de données (10) comprend une unité de traitement de données (102), un système de surveillance de centrale électrique (103) et un onduleur photovoltaïque (101) connecté à la chaîne photovoltaïque (2) ;
le système de surveillance de centrale électrique (103) est configuré pour : collecter, sur la base de l'emplacement cible, un premier rendement énergétique du module défectueux dans une période cible, et collecter, sur la base de l'emplacement adjacent à l'emplacement cible, un second rendement énergétique du module normal dans la période cible ; et l'onduleur photovoltaïque (101) est configuré pour collecter une courbe IV du module normal sur la base de l'emplacement adjacent à l'emplacement cible ; et l'unité de traitement de données (102) est configurée pour : déterminer le premier rendement énergétique en tant que premières données de production d'énergie du module défectueux, déterminer une puissance de crête du module normal sur la base de la courbe IV du module normal, et déterminer le second rendement énergétique et la puissance de crête du module normal en tant que secondes données de production d'énergie du module normal.

2. Système selon la revendication 1, dans lequel les données de module comprennent des données d'image de module, et le système d'exploitation et de maintenance de centrale électrique comprend en outre un véhicule aérien sans pilote (30) et un terminal de collecte de données (40) disposé sur le véhicule aérien sans pilote (30) ; le terminal de collecte de données (40) est configuré pour collecter les données d'image de module de chaque module photovoltaïque, dans lequel les données d'image de module contiennent une hauteur de prise de vue, un angle d'inclinaison de prise de vue et des informations de longitude et de latitude du véhicule aérien sans pilote (30) qui existent lorsque le terminal de collecte de données photographie le module photovoltaïque ; et le système de traitement de données est en outre configuré pour : déterminer le module défectueux sur la base des données d'image de module de chaque module photovoltaïque, et déterminer les informations de localisation de longitude et de latitude du module défectueux sur la base de la hauteur de prise de vue, de l'angle d'inclinaison de prise de vue et des informations de longitude et de latitude du véhicule aérien sans pilote (30) qui se trouvent dans des données d'image de module du module défectueux.

3. Système selon la revendication 2, dans lequel les données de module comprennent en outre une courbe IV, la centrale électrique photovoltaïque comprend une pluralité de chaînes photovoltaïques, et le système de traitement de données comprend une unité de traitement de données et au moins un onduleur photovoltaïque connecté à la pluralité de chaînes photovoltaïques ;
chaque onduleur photovoltaïque est configuré pour collecter une courbe IV de chaque chaîne photovoltaïque, et l'unité de traitement de données est configurée pour déterminer une chaîne photovoltaïque défectueuse sur la base de la courbe IV de chaque chaîne photovoltaïque ; et
le terminal de collecte de données est configuré pour collecter des données d'image de module de chaque module photovoltaïque dans la chaîne photovoltaïque défectueuse.

4. Système selon l'une quelconque des revendications 1 à 3, dans lequel le système de traitement de données est configuré pour : obtenir un paramètre d'exploitation et de maintenance de chaque mesure d'exploitation et de maintenance de la pluralité de mesures d'exploitation et de maintenance, et obtenir, sur la base de la perte de rendement énergétique annuelle du module défectueux et du paramètre d'exploitation et de maintenance de chaque mesure d'exploitation et de maintenance, chaque valeur d'évaluation d'exploitation et de maintenance correspondant à chaque mesure d'exploitation et de maintenance ; et le système de traitement de données est en outre configuré pour : déterminer une valeur d'évaluation d'exploitation et de maintenance la plus petite parmi toutes les valeurs d'évaluation d'exploitation et de maintenance, et lorsque la valeur d'évaluation d'exploitation et de maintenance la plus petite est inférieure à un seuil d'évaluation d'exploitation et de maintenance, déterminer une mesure d'exploitation et de maintenance ayant la valeur d'évaluation d'exploitation et de maintenance la plus petite en tant que mesure d'exploitation et de maintenance cible, dans lequel le paramètre d'exploitation et de maintenance comprend un coût d'exploitation et de maintenance, un paramètre de bénéfice et un tarif de rachat d'électricité injectée sur le réseau, et le paramètre de bénéfice est déterminé par un rendement énergétique annuel qui est augmenté sur la base de la mesure d'exploitation et de maintenance.

5. Système selon l'une quelconque des revendications 1 à 4, dans lequel le système de communication est configuré pour notifier, sur la base de la mesure d'exploitation et de maintenance cible, à l'utilisateur d'exploitation et de maintenance de remplacer une diode connectée en parallèle au module défectueux, afin d'augmenter le rendement énergétique.

6. Système selon l'une quelconque des revendications 1 à 4, dans lequel le système de communication est configuré pour notifier, sur la base de la mesure d'exploitation et de maintenance cible, à l'utilisateur d'exploitation et de maintenance de connecter un optimiseur en parallèle aux deux extrémités du module défectueux, pour ajuster une tension, un courant et/ou une puissance de sortie du module défectueux, de manière à augmenter le rendement énergétique.

7. Système selon l'une quelconque des revendications 1 à 4, dans lequel le système de communication est configuré pour notifier, sur la base de la mesure d'exploitation et de maintenance cible, à l'utilisateur d'exploitation et de maintenance de remplacer le module défectueux, afin d'augmenter le rendement énergétique.

8. Système selon l'une quelconque des revendications 1 à 4, dans lequel le système de communication est configuré pour notifier, sur la base de la mesure cible d'exploitation et de maintenance, à l'utilisateur d'exploitation et de maintenance de connecter un dispositif externe en parallèle aux deux extrémités du module défectueux, afin d'appliquer une tension inverse ou un courant inverse aux deux extrémités du module défectueux, de manière à augmenter le rendement énergétique.

9. Système selon l'une quelconque des revendications 1 à 4, dans lequel le système de communication est configuré pour notifier, sur la base de la mesure d'exploitation et de maintenance cible, à l'utilisateur d'exploitation et de maintenance d'appliquer une tension positive à une tension par rapport à la terre du module défectueux, de manière à augmenter le rendement énergétique.

10. Procédé d'exploitation et de maintenance de centrale électrique, dans lequel le procédé est appliqué au système de traitement de données (10) dans le système d'exploitation et de maintenance de centrale électrique (1) selon l'une quelconque des revendications 1 à 9, et le procédé comprend :
la détermination (S101) d'un module défectueux et d'un module normal sur la base de données de module de chaque module photovoltaïque de la chaîne photovoltaïque, et l'obtention de premières données de production d'énergie du module défectueux et de secondes données de production d'énergie du module normal ;
la détermination (S102) d'une perte de rendement énergétique annuelle du module défectueux sur la base des premières données de production d'énergie, des secondes données de production d'énergie et d'un rendement énergétique prédéfini de la centrale électrique photovoltaïque, et l'obtention d'une mesure d'exploitation et de maintenance cible parmi une pluralité de mesures d'exploitation et de maintenance sur la base de la perte de rendement énergétique annuelle du module défectueux ; et
la notification (S103), sur la base de la mesure d'exploitation et de maintenance cible en utilisant un système de communication, à un utilisateur d'exploitation et de maintenance de la centrale électrique photovoltaïque d'effectuer une exploitation et une maintenance du module défectueux, afin d'augmenter un rendement énergétique.

11. Procédé selon la revendication 10, dans lequel avant l'obtention des premières données de production d'énergie du module défectueux et des secondes données de production d'énergie du module normal, le procédé comprend :
l'obtention d'informations de localisation de longitude et de latitude du module défectueux, et la détermination d'un emplacement cible du module défectueux sur la base des informations de localisation de longitude et de latitude du module défectueux et d'une carte de disposition de modules de la centrale électrique photovoltaïque ; et
l'obtention de premières données de production d'énergie du module défectueux et de secondes données de production d'énergie du module normal comprend :
l'obtention des premières données de production d'énergie du module défectueux sur la base de l'emplacement cible, et l'obtention des secondes données de production d'énergie du module normal sur la base d'un emplacement adjacent à l'emplacement cible dans la carte de disposition de modules.

12. Procédé selon la revendication 11, dans lequel l'obtention d'informations de localisation de longitude et de latitude du module défectueux comprend :
la collecte des données d'image de module de chaque module photovoltaïque en utilisant un terminal de collecte de données, dans lequel les données d'image de module contiennent une hauteur de prise de vue, un angle d'inclinaison de prise de vue et des informations de longitude et de latitude du véhicule aérien sans pilote qui existent lorsque le terminal de collecte de données photographie le module photovoltaïque ; et
la détermination du module défectueux sur la base des données d'image de module de chaque module photovoltaïque, et la détermination des informations de localisation de longitude et de latitude du module défectueux sur la base de la hauteur de prise de vue, de l'angle d'inclinaison de prise de vue et des informations de longitude et de latitude du véhicule aérien sans pilote qui se trouvent dans des données d'image de module du module défectueux.
